# EUROPÄISCHE PATENTSCHRIFT

(11) **EP 2 071 225 B1**
(45) Veröffentlichungstag und Bekanntmachung des Hinweises auf die Patenterteilung: **30.09.2020**
(21) Anmeldenummer: 08018458.3
(22) Anmeldetag: 22.10.2008
(51) Int. Cl.: F17C 11/00, F17C 3/10, F17C 5/06, F17C 6/00, F17C 7/00, F17C 13/02

(54) **Verfahren zum Betanken eines Metallhydridspeichers eines Unterseeboots mit Wasserstoff**
Method for filling a metal hydride store of a submarine with hydrogen
Procédé de remplissage de réservoir d'hydrure métallique d'un sous-marin avec de l'hydrogène

(30) Priorität: 07.12.2007 DE 102007059087
(43) Veröffentlichungstag der Anmeldung: 17.06.2009
(73) Patentinhaber: thyssenkrupp Marine Systems GmbH, 24143 Kiel (DE)
(72) Erfinder: Daniels, Diethelm, 24235 Laboe (DE); Kanning, Michael, 24536 Neumünster (DE); Witte, Bernd, 24106 Kiel (DE)
(74) Vertreter: thyssenkrupp Intellectual Property GmbH

(56) Entgegenhaltungen:
- DE-A1- 10 343 977
- US-A1- 2002 029 820

## Beschreibung

Die Erfindung betrifft ein Verfahren zum Betanken eines Metallhydridspeichers eines Unterseeboots mit Wasserstoff mit den im Oberbegriff des Anspruchs 1 angegebenen Merkmalen sowie eine Reaktandentankstelle zum Ausführen dieses Verfahrens.

Bekannt sind Unterseeboote, die elektrische Energie durch eine katalytische Oxidation von Sauerstoff und Wasserstoff in einer Brennstoffzelle beziehen, wobei der hierzu erforderliche Wasserstoff an Bord dieser Unterseeboote in Metallhydridspeichern gespeichert ist. Das Befüllen dieser Metallhydridspeicher mit Wasserstoff erfolgt üblicherweise mit einer sogenannten Reaktandentankstelle. Eine solche Reaktandentankstelle ist in DE 103 43 977 A1 beschrieben. Diese Reaktandentankstelle weist eine an den Metallhydridspeicher anschließbare Dispensereinheit auf. Über diese Dispensereinheit wird gasförmiger Wasserstoff kontrolliert in die Metallhydridspeicher des Unterseeboots geleitet. Da die Anbindung des Wasserstoffs in dem Metallhydridspeicher exotherm, d.h. unter Wärmeabgabe verläuft, verfügt die Reaktandentankstelle als wesentlichen Bestandteil weiterhin über eine Kühleinrichtung. Diese Kühleinrichtung dient dazu, den in dem Unterseeboot angeordneten Metallhydridspeicher während des Betankens mit Wasserstoff zu kühlen. Zu diesem Zweck weist die Kühleinrichtung eine Pumpe auf, mit der Seewasser aus der Umgebung des Unterseeboots gesaugt wird und zu den Metallhydridspeichern geleitet wird, welches dort die Metallhydridspeicher kühlt und anschließend wieder in die Umgebung des Unterseeboots abgelassen wird. Hierbei wird angestrebt, die Temperatur der Metallhydridspeicher auf einen Wert von maximal 5 °C zu halten. Für den Fall, dass die Seewassertemperatur oberhalb von 5 °C liegt, weist die Kühlwassereinrichtung der bekannten Reaktandentankstelle ein Kühlaggregat auf, mit dem das Seewasser auf eine hierfür erforderliche Temperatur abgekühlt wird.

Die Nachteile der in DE 103 43 977 A1 beschriebenen Reaktandentankstelle ergeben sich insbesondere dann, wenn ein Unterseeboot nach dem vollständigen Betanken der Metallhydridspeicher, d.h. beim Fahren einer Seewassertemperatur ausgesetzt ist, die deutlich oberhalb der Temperatur des Wassers liegt, das während des Betankens zum Kühlen der Metallhydridspeicher verwendet worden ist. Dies ist insofern problematisch, als die außerhalb des Druckkörpers des Unterseeboots angeordneten Metallhydridspeicher nach dem Tanken von dem sie umgebenden Seewasser erwärmt werden, wodurch Wasserstoff in den Metallhydridspeichern wieder gasförmig freigesetzt wird, was in den Metallhydridspeichern zu einem Überdruck führt, der es erforderlich macht, den freigesetzten Wasserstoff zum Druckausgleich über ein manuell betätigtes Überdruckventil abzulassen.

Vor diesem Hintergrund liegt der Erfindung die Aufgabe zugrunde, ein Verfahren zum Betanken eines Metallhydridspeichers mit Wasserstoff sowie eine insbesondere zum Ausführen dieses Verfahrens geeignete Reaktandentankstelle zu schaffen, mit denen die Metallhydridspeicher eines Unterseeboots unter Vermeidung der oben genannten Nachteile unabhängig von der Umgebungswassertemperatur vollständig befüllt werden können.

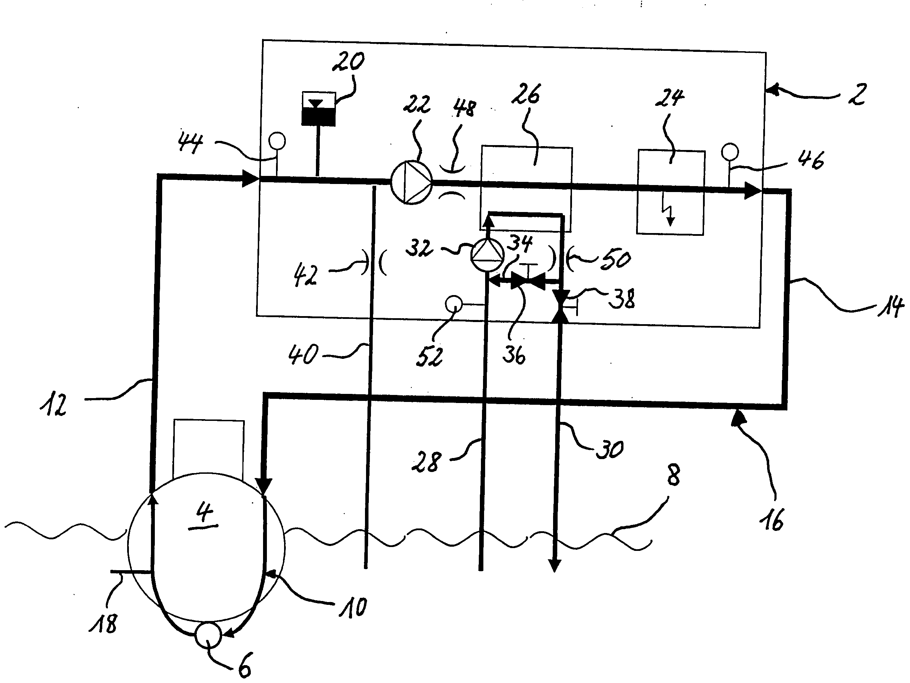

Diese Aufgabe wird durch ein Verfahren zum Betanken eines Metallhydridspeichers eines Unterseeboots mit Wasserstoff gemäß Anspruch 1 sowie durch eine Reaktandentankstelle zum Befüllen eines Metallhydridspeichers eines Unterseeboots mit Wasserstoff gemäß Anspruch 3 gelöst. Vorteilhafte Weiterbildungen der Erfindung ergeben sich aus den Unteransprüchen, der nachfolgenden Beschreibung und der Zeichnung.

Das erfindungsgemäße Verfahren zum Betanken eines Metallhydridspeichers eines Unterseeboots mit Wasserstoff sieht vor, dass die Temperatur des Metallhydridspeichers beim Betanken auf einem Wert oberhalb einer maximal zu erwartenden Temperatur des Umgebungswassers des Unterseeboots gehalten wird.

Grundidee der Erfindung ist es also, den Metallhydridspeicher eines Unterseeboots bei einer Temperatur zu betanken, bei der das Umgebungswasser die Metallhydridspeicher nach dem Betanken nicht höher als beim Betanken erwärmen kann. Auf diese Weise wird verhindert, dass der gespeicherte Wasserstoff nach dem Betanken gasförmig freigesetzt wird. Während des Betankens wird das Freisetzen von gasförmigem Wasserstoff durch eine Temperaturführung verhindert, die der bei der exotherm verlaufenden Wasserstoffaufnahme auftretenden Erwärmung entgegen wirkt. Dementsprechend kann bei dem erfindungsgemäßen Verfahren zum Betanken eines Metallhydridspeichers in dem Metallhydridspeicher kein unzulässiger Überdruck entstehen, der ansonsten abzubauen wäre. Vorteilhafterweise kann so bootsseitig auf eine Einrichtung zum Abblasen gasförmigen Wasserstoffs verzichtet werden. Da es bei dem erfindungsgemäßen Verfahren im Gegensatz zum Stand der Technik nicht erforderlich ist, die Temperatur des Metallhydridspeichers unter die Umgebungswassertemperatur abzusenken, kann vorteilhafterweise auf ein hierzu erforderliches Kühlaggregat der Reaktenadentankstelle verzichtet werden. Zwar kann es dann, wenn die exotherme Wasserstoffaufnahme den Metallhydridspeicher nicht ausreichend erwärmt, erforderlich sein, diesen zu beheizen, allerdings ist das Beheizen sowohl energetisch als auch anlagentechnisch bedeutend günstiger als die bislang erforderliche Kühlung mittels eines Kühlaggregats.

In der Anfangsphase kann die Temperatur der Metallhydridspeicher aufgrund dort stattfindender exothermer Prozesse vorübergehend auf Temperaturen deutlich oberhalb von 32°C ansteigen, wobei diese Temperaturen über einen Wärmetausch mit dem die Metallhydridspeicher umgebenden Seewasser wieder gesenkt werden und sich gegen Ende der Betankung aufgrund nachlassender Prozesswärme der Temperatur des den Metallhydridspeicher umgebenden Seewassers angleicht.

Wenn für die maximal zu erwartende Umgebungswassertemperatur, d.h. Seewassertemperatur, ein Wert von z.B. 32 °C angenommen wird, ist es zweckmäßig, die Temperatur des Metallhydridspeichers beim Betanken derart zu regeln, dass sie zum Ende des Betankens einen Wert innerhalb eines Temperaturbereichs von 32 °C bis 34 °C also oberhalb dieser maximal angenommenen Seewassertemperatur aufweist.

Insbesondere zum Befüllen eines Metallhydridspeichers mit Wasserstoff nach dem oben beschriebenen erfindungsgemäßen Verfahren, schlägt die Erfindung des Weiteren eine Reaktandentankstelle vor, bei der Mittel zum Erwärmen eines Metallhydridspeichers vorgesehen sind. Diese Mittel ermöglichen es mit den bereits beschriebenen Vorteilen, die Temperatur des Metallhydridspeichers auf einer Temperatur oberhalb der maximal zu erwartenden Umgebungswassertemperatur des Unterseeboots einzustellen und zu halten. Da die Mittel zum Erwärmen des Metallhydridspeichers außerhalb des Unterseeboots in der Reaktandentankstelle angeordnet sind, sind sie typischerweise zu Erwärmung eines Wärmeträgermediums ausgebildet, das über hierfür vorgesehene Leitungen der Reaktandentankstelle in das Unterseeboot zu den Metallhydridspeichern geführt werden kann und dort seine Wärme an die Metallhydridspeicher abgeben kann. Als Wärmespeichermedium ist hierbei bevorzugt das Umgebungswasser des Unterseeboots vorgesehen, das vorzugsweise mittels einer in der Reaktandentankstelle angeordneten elektrischen Heizung erwärmt wird. Um die Temperatur der Metallhydridspeicher konstant halten zu können, ist die elektrische Heizung der erfindungsgemäßen Reaktandentankstelle besonders vorteilhaft stufenlos einstellbar ausgebildet.

Neben den Mitteln zum Erwärmen des Metallhydridspeichers des Unterseeboots weist die erfindungsgemäße Reaktandentankstelle in bevorzugter Weiterbildung auch Mittel zum Kühlen des Metallhydridspeichers auf. Diese Mittel sind insofern vorteilhaft, als zu hohe Temperaturen in dem Metallhydridspeicher die Wasserstoffaufnahme hemmen. Als Mittel zum Kühlen des Metallhydridspeichers kann die Reaktandentankstelle beispielsweise einen Kühlmittelkreislauf aufweisen, mit dem die Temperatur eines dort zirkulierenden Fluids mit dem der Metallhydridspeicher auch erwärmt wird, durch Aufnahme der Wärme des Metallhydridspeichers so gesenkt werden kann, dass der Metallhydridspeicher mit diesem Fluid gekühlt werden kann. Als Fluid ist hierbei bevorzugt das Umgebungswasser des Unterseeboots vorgesehen.

In einer weiteren vorteilhaften Ausgestaltung der erfindungsgemäßen Reaktandentankstelle ist diese an ein bootseitiges Leitungssystem zur Bildung eines geschlossenen Wasserkreislaufs anschließbar. Bei dieser Ausgestaltung bilden die Reaktandentankstelle und ein zum Wärmeaustausch mit dem Metallhydridspeicher ausgebildetes Leitungssystem des Unterseeboots einen geschlossenen Kreislauf, in den vorzugsweise das Umgebungswasser des Unterseeboots eingeleitet wird und anschließend bei Zirkulation in dem Kreislauf seine Wärme an den Metallhydridspeicher abgeben oder bei Kühlung des Wassers Wärme des Metallhydridspeichers aufnehmen kann. Zum Anschluss der Reaktandentankstelle an das bootseitige Leitungssystem weist die Reaktandentankstelle vorzugsweise Schlauchleitungen auf, die an hierfür vorgesehene Anschlüsse des bootsseitigen Leitungssystems anschließbar sind.

Innerhalb des von der Reaktandentankstelle gebildeten Teils des Wasserkreislaufs ist mit diesem Wasserkreislauf bevorzugt die elektrische Heizung derart gekoppelt, dass sie das den Kreislauf durchströmende Wasser in der geforderten Weise erwärmen kann. Des Weiteren kann in dem Wasserkreislauf vorteilhaft ein eingangseitig mit Umgebungswasser gespeister Wärmetauscher angeordnet sein, mit dem das Wasser und damit einhergehend der Metallhydridspeicher ggf. abgekühlt werden kann. Dieser Wärmetauscher ist bevorzugt als ein Plattenwärmetauscher ausgebildet, der eingangseitig von einer geeigneten Ansaugeinrichtung mit Umgebungswasser des Unterseeboots als Kühlmedium versorgt werden kann. Eingangsseitig der Ansaugeinrichtung ist zweckmäßigerweise eine Filtereinrichtung angeordnet, die verhindert, dass solche in dem Umgebungswasser befindlichen Teile in den Wasserkreislauf eindringen können, die diesen ungünstigstenfalls verstopfen könnten. Zum exakten Einstellen und Halten der Temperatur des Metallhydridspeichers auf einen Wert oberhalb der maximal zu erwartenden Umgebungswassertemperatur weist die erfindungsgemäße Reaktandentankstelle vorteilhafterweise eine Temperaturregeleinrichtung auf. Diese Temperaturregeleinrichtung bildet einen Teil eines Regelkreises, in dem bevorzugt die Mittel zu Erwärmen und Kühlen der Metallhydridspeicher und bevorzugt auch eine Umwälzpumpe eine Regelstrecke bilden. Die Temperaturregeleinrichtung ist bevorzugt als elektronische Regeleinrichtung ausgebildet, in der die Temperatur des Metallhydridspeichers mittels eines gespeicherten Algorithmus geregelt wird. Hierbei werden vorteilhaft die Heizleistung einer elektrischen Heizung, die Kühlleistung eines Kühlmittelkreislaufs sowie die Motordrehzahl der Umwälzpumpe als Stellgrößen des Regelkreises von der Temperaturregeleinrichtung eingestellt.

Insbesondere dann, wenn die Temperatur der Metallhydridspeicher nicht direkt aufgenommen werden kann, erweist es sich als vorteilhaft, die Temperatur des Wasserkreislaufs sowohl eingangs- als auch ausgangsseitig des Metallhydridspeichers zu erfassen und die Temperatur des Metallhydridspeichers mittels eines hierfür vorgesehen Rechenmodels der Temperaturregeleinrichtung zu ermitteln. Dementsprechend sieht eine weitere erfindungsgemäße Ausgestaltung der Reaktandentankstelle vorteilhaft eingangs- und ausgangsseitig der Metallhydridspeicher Mittel zum Erfassen der Wassertemperatur vor, die mit der Temperaturregeleinrichtung signalverbunden sind. Die Erfassung der Wassertemperatur des Wasserkreislaufs vor und hinter dem Metallhydridspeicher dient bei dieser Ausbildung somit zum Einstellen der Temperatur des Metallhydridspeichers als eigentlicher, nicht direkt erfassbarer Regelgröße, die durch geeignete Ansteuerung der Mittel zum Erwärmen und Kühlen des Metallhydridspeichers sowie der Umwälzpumpe mit äußerst geringen Regelschwankungen auf den verlangten Sollwert gehalten werden kann.

Der von der Reaktandentankstelle und dem bootseitigen Leitungssystem gebildete geschlossene Wasserkreislauf muss zunächst mit Wasser gefüllt werden. Dies kann z.B. über die in dem Wasserkreislauf angeordnete Umwälzpumpe erfolgen. Wenn diese Umwälzpumpe zum Ansaugen von Wasser in den Wasserkreislauf nicht geeignet ist, sieht eine vorteilhafte Ausgestaltung der erfindungsgemäßen Reaktandentankstelle vor, anströmseitig der Umwälzpumpe eine Ansaugeinrichtung, vorzugsweise in Form einer Vakuumansaugeinrichtung anzuordnen, mit der der Wasserkreislauf zunächst mit Wasser gefüllt wird, bevor er anschließend geschlossen wird und das Wasser in dem Wasserkreislauf mittels der Umwälzpumpe umgewälzt wird. Neben dem Ansaugen des Wassers dient die Vakuumansaugeinrichtung vorteilhaft auch dazu, die bei steigender Wassertemperatur in dem Wasserkreislauf entstehenden Ausgasungen sowie die z. B. über defekte Schlauchleitungen in den Wasserkreislauf eingedrungene Luft abzuführen.

Das von der Ansaugeinrichtung angesaugte Umgebungswassers gelangt bevorzugt über ein geöffnetes Seewasserventil des Unterseeboots, das mit dem den bootseitigen Abschnitt des Wasserkreislaufs bildenden Leitungssystem leitungsverbunden ist, in den Wasserkreislauf. Anströmseitig des Wasserkreislaufs sind hierbei zweckmäßigerweise Filter angeordnet, die das Eindringen von in dem Umgebungswasser befindlichen Schwebteilchen verhindern, welche ansonsten zu einer Beschädigung von boots- bzw. tankstellenseitigen Bauteilen führen könnten.

Vorteilhaft kann die Reaktandentankstelle auch eine in dem Umgebungswasser mündende Ansaugleitung aufweisen. Diese Ansaugleitung dient vorzugsweise dazu, während der Zirkulation des Umgebungswassers in dem Wasserkreislauf aufgrund von Leckagen an dem Wasserkreislauf auftretende Wasserverluste auszugleichen. Zweckmäßigerweise ist in der Ansaugleitung eine Durchflussmesseinrichtung, vorzugsweise in Form eines induktiven Messaufnehmers vorgesehen, mit der der Wasserdurchsatz durch die Ansaugleitung kontinuierlich gemessen wird. Die von der Messeinrichtung ermittelten Messwerte können vorteilhaft an eine Überwachungseinrichtung weitergeleitet werden, die ermittelt, ob ein normalerweise üblicher Wasserverlust oder ein durch eine Beschädigung des bootsseitigen Leitungssystems oder der Reaktandentankstelle verursachter Wasserverlust über die Ansaugleitung ausgeglichen werden muss.

Die zum Ausgleich von Leckageverlusten vorgesehene Ansaugleitung mündet bevorzugt direkt anströmseitig der Umwälzpumpe in dem Wasserkreislauf. Durch diese Maßnahme werden durch Leckage verursachte Strömungsverluste direkt ansaugseitig der Pumpe ausgeglichen, sodass Strömungsverluste von dem Unterseeboot zu der Reaktandentankstelle nicht den absoluten Wasserdruck vor der Pumpe beinflussen, was ungünstigstenfalls zu einer Kavitation in der Umwälzpumpe und einer hierdurch verursachten Beschädigung der Umwälzpumpe führen könnte. Darüber hinaus ermöglicht diese Ausgestaltung einen höheren Aufstellort der Reaktandentankstelle über dem Wasserspiegel, d. h., die Reaktandentankstelle kann auch auf gegenüber der Wasseroberfläche hohen Pieren aufgestellt werden.

Nachfolgend ist die Erfindung anhand eines in der Zeichnung dargestellten Ausführungsbeispiels näher erläutert. Die Figur zeigt schematisch den prinzipiellen Aufbau einer Reaktandentankstelle.

In der Figur ist ein Teilbereich einer Reaktandentankstelle 2 dargestellt, die zum Befüllen eines Metallhydridspeichers 6 eines mit einem Brennstoffzellenantrieb ausgerüsteten Unterseeboots 4 mit Wasserstoff dient. Hierbei erfolgt das eigentliche Befüllen der Metallhydridspeicher 6 mittels eines nicht dargestellten Dispensers, über den der Wasserstoff gasförmig in den Metallhydridspeicher geleitet wird.

Während des Befüllens des Metallhydridspeichers 6 wird dessen Temperatur auf einem Wert oberhalb der maximal zu erwartenden Temperatur des Umgebungswassers 8 des Unterseeboots 4, d.h. oberhalb von 32 °C gehalten. Zu diesem Zweck ist der Metallhydridspeicher 6 doppelwandig ausgebildet, wobei ein Wärmeträger über ein bootsseitiges Leitungssystem 10 in den Zwischenraum zwischen den beiden Wänden des Metallhydridspeichers geleitet wird und dort seine Wärme an den Metallhydridspeicher 6 abgibt bzw. Wärme aufnimmt.

Der Wärmeträger zum Erwärmen des Metallhydridspeichers 6 bzw. zum Aufnehmen der Wärme des Metallhydridspeichers 6 wird von der Reaktandentankstelle 2 in Form von entsprechend temperiertem Wasser zur Verfügung gestellt. Hierzu ist die Reaktandentankstelle 2 über vakuumfeste Schlauchleitungen 12 und 14 derart an das Leitungssystem 10 des Unterseeboots 4 anschließbar, dass die Reaktandentankstelle 2 zusammen mit diesem Leitungssystem 10 einen geschlossenen Kreislauf 16 bildet.

Als Wärmeträger in diesem Kreislauf 16 wird Umgebungswasser 8 des Unterseeboots 4 verwendet. Das Befüllen des Kreislaufs 16 bzw. Wasserkreislaufs 16 mit dem Umgebungswasser 8 erfolgt, indem das Umgebungswasser 8 über ein an dem Unterseeboot 4 vorgesehenes Seewasserventil (nicht dargestellt), das über eine Leitung 18 mit dem Leitungssystem 10 leitungsverbunden ist, von einer in der Reaktandentankstelle 2 vorgesehene Vakuumansaugeinrichtung 20 angesaugt wird. Zum Umwälzen des Umgebungswassers 8 in dem Wasserkreislauf 16 weist die Reaktandentankstelle 2 eine Umwälzpumpe 22 auf, die in dem Wasserkreislauf 16 abströmseitig der Vakuumansaugvorrichtung 20 angeordnet ist. Die Motordrehzahl der Umwälzpumpe 22 ist stufenlos einstellbar.

Um die Temperatur des Metallhydridspeichers 6 auf eine Temperatur oberhalb der maximal zu erwartenden Temperatur des Umgebungswassers 8 des Unterseeboots 4 erwärmen zu können, weist die Reaktandentankstelle 2 eine elektrische Heizung 24 auf, die derart angeordnet ist, dass sie ihre Wärme an das in dem Wasserkreislauf 16 befindliche Umgebungswasser 8 abgibt. Die Wärmeleistung der Heizung 24 ist stufenlos einstellbar.

Darüber hinaus ist in der Reaktandentankstelle 2 ein Wärmetauscher 26 mit dem Wasserkreislauf 16 wärmegekoppelt angeordnet. Dieser ist vorzugsweise als ein Plattenwärmetauscher ausgebildet. Der Wärmetauscher 26 wird über eine im Umgebungswasser 8 des Unterseeboots 4 mündende Einlassleitung 28 mit Umgebungswasser 8 als Kühlmedium gespeist, welches anschließend über eine an dem Wärmetauscher 26 angeordnete und ebenfalls in dem Umgebungswasser 8 mündende Ablassleitung 30 abgeführt wird. Zum Ansaugen des Umgebungswassers 8 zu dem Wärmetauscher 26 ist in der Einlassleitung 28 eine Ansaugpumpe 32 angeordnet.

Die Einlassleitung 28 ist über eine Kurzschlussleitung 34 mit der Ablassleitung verbunden, wobei die Kurzschlussleitung 34 eingangsseitig der Ansaugpumpe 32 in die Einlassleitung 28 mündet. In der Kurzschlussleitung 34 ist ein Ventil 36 angeordnet, mit dem die Kurzschlussleitung 34 wahlweise ganz oder teilweise geöffnet oder verschlossen werden kann. Ein weiteres Ventil 38 ist in der Ablassleitung 30 abströmseitig der Kurzschlussleitung 34 angeordnet, mit dem die Ablassleitung 30 wahlweise ganz oder teilweise geöffnet oder verschlossen werden kann. Sowohl die Einlassleitung 28 als auch die Ablassleitung 30 werden von vakuumfesten Schläuchen gebildet. Das in der Kurzschlussleitung 34 angeordnete Ventil 36 ist bei Inbetriebnahme des Wärmetauschers 26 zunächst vollständig geöffnet. Bei zunehmender Kühlanforderung an den Wärmetauscher 26 wir der Öffnungsquerschnitt des Ventils 26 verringert und das Ventil 38 entsprechend geöffnet, so dass dem Wärmetauscher 26 eine größere Menge kühleres Wasser zugeführt wird, während das von dem Wärmetauscher 26 erwärmte Wasser über die Ablassleitung 30 abgeführt wird.

Um eine Verstopfung oder Beschädigung des Wärmetauschers 26 durch in dem Umgebungswasser 8 befindliche Schwebteichen zu verhindern, weist die Einlassleitung 28 an ihrem in dem Umgebungswasser 8 mündenden Ende einen in der Zeichnungsfigur nicht dargestellten Grobfilter auf. Daneben sind in der Reaktandentankstelle 2 direkt eingangsseitig des Wärmetauschers 26 hintereinander zwei ebenfalls in der Zeichnungsfigur nicht dargestellte Feinfilter angeordnet, die wechselweise genutzt werden, so dass der Wärmetauscher 26 auch bei Reinigung eines der Feinfilter betrieben werden kann, da der andere Feinfilter das Eindringen von Partikeln in den Wärmetauscher 26 verhindert.

Zum Atmen des Wasserkreislaufs 16 bei einer Wärmeausdehnung des darin befindlichen Wassers aber auch zum Ausgleich von durch Leckage verursachten Wasserverlusten in dem Wasserkreislauf 16 weist dieser anströmseitig der Umwälzpumpe 22 einen Leitungsabzweig auf, der eine in dem Umgebungswasser 8 mündende Ausgleichsleitung 40 in Form eines vakuumfesten Schlauches bildet. Über diese Ausgleichsleitung 40 wird bei zirkulierendem Wasserkreislauf 16, die Menge Umgebungswassers 8 nachgeführt, die zuvor aufgrund von Leckagen des Wasserkreislaufs 16 verloren gegangen ist.

Um die Menge des über die Ausgleichseitung 40 nachgeführten Umgebungswassers 8 und damit einhergehend die infolge von Leckagen verloren gegangene Wassermenge bestimmen zu können, ist in der Ausgleichsleitung 40 eine Durchflussmesseinrichtung 42 angeordnet, die mit einer nicht dargestellten Überwachungseinrichtung signalverbunden ist. Die Überwachungseinrichtung dient dazu, anhand des von der Durchflussmesseinrichtung 42 ermittelten Durchsatzes nachgeführten Umgebungswassers 8 festzustellen, ob dieser Durchsatz von Umgebungswasser 8 normale oder durch Beschädigung des Wasserkreislaufs 16 verursachte Leckageverluste ausgleicht.

Des Weiteren verfügt die Reaktandentankstelle 2 über eine in der Zeichnungsfigur nicht dargestellte Temperaturregeleinrichtung. Diese Temperaturregeleinrichtung ist mit der Umwälzpumpe 22, der elektrischen Heizung 24 und mit der eingangsseitig des Wärmetauschers 26 angeordneten Ansaugpumpe 32 sowie den Ventilen 36 und 38 signalverbunden.

Ebenfalls mit der Temperaturregeleinrichtung signalverbunden sind zwei in der Reaktandentankstelle 2 angeordnete Temperatursensoren 44 und 46 zur Erfassung der Temperatur des Umgebungswassers 8 in dem Wasserkreislauf 16. Von diesen beiden Temperatursensoren 44 und 46 nimmt der Temperatursensor 44 die Temperatur in dem Wasserkreislauf 16 ausgangsseitig des Metallhydridspeichers 6 und der der Temperatursensor 46 die Temperatur in dem Wasserkreislauf 16 eingangsseitig des Metallhydridspeichers 6 auf. Zur Erfassung der Temperatur eingangsseitig des Wärmetauschers 26 ist in der Einlassleitung 28 ein mit der Temperaturregeleinrichtung signalverbundener Temperatursensor 52 angeordnet.

Darüber hinaus wird der Wasserdurchsatz in dem Wasserkreislauf 16 von einer Durchflussmesseinrichtung 48 und der Wasserdurchsatz durch den Wärmetauscher 26 von einer Durchflussmesseinrichtung 50 erfasst. Die mit der Temperaturregeleinrichtung signalverbundene Durchflussmesseinrichtung 48 ist in dem Wasserkreislauf 16 ausgangsseitig der Umwälzpumpe 22 angeordnet. Die ebenfalls mit der Temperaturregeleinrichtung signalverbundene Durchflussmesseinrichtung 50 ist ausgangsseitig des Wärmetauschers 26 in der Ablassleitung 30 angeordnet.

Die Temperaturregeleinrichtung, die von der Temperaturregeleinrichtung angesteuerten Komponenten Umwälzpumpe 22, Heizung 24, Ansaugpumpe 32, Ventile 36 und 38 sowie die mit der Temperaturregeleinrichtung signalverbundenen Temperatursensoren 44, 46, 52 und Durchflussmesseinrichtungen 42, 48 und 50 sind bevorzugt gemeinsam in einem transportablen Container angeordnet. Dieser Container dient auch zur Lagerung der Schläuche, die zur Bildung der Schlauchleitungen 12 und 14, der Einlassleitung 28, der Ablassleitung 30 sowie der Ansaugleitung 40 an hierfür an dem Container vorgesehenen Schlauchanschlüssen anschließbar sind. Der Container kann im gestauten Zustand ohne Einschränkungen zu See, Luft und Land transportiert werden und zum Betanken des Metallhydridspeichers 6 eines Unterseeboots 4 an einer Hafenpier in direkter Nähe des betreffenden Unterseeboots 4 aufgestellt werden. Die elektrische Versorgung der in dem Container angeordneten Anlagenteile kann wahlweise mit unterschiedlichen Spannungen und Frequenzen erfolgen. Die erforderlichen Kabelanschlüsse sind in dem Container auf rollbaren Kabeltrommeln (nicht dargestellt) gelagert.

Nachfolgend wird das erfindungsgemäße Verfahren zum Betanken eines Metallhydridspeichers 6 eines Unterseeboots 4 mit Wasserstoff anhand der Zeichnungsfigur eingehender beschrieben.

Zunächst wird der Wasserkreislauf 16 mit Umgebungswasser 8 des Unterseeboots 4 befüllt. Hierzu wird an dem Unterseeboot 4 das Seewasserventil geöffnet. Die Vakuumansaugeinrichtung 20 saugt daraufhin das Umgebungswasser 8 über die Stichleitung 18 in den Wasserkreislauf 16. Sobald dieser vollständig mit Umgebungswasser 8 aufgefüllt ist, wird das Seewasserventil des Unterseeboots 4 geschlossen und die Vakuumansaugeinrichtung 20 abgeschaltet. Anschließend wird die Umwälzpumpe 22 in Betrieb gesetzt und das Umgebungswasser 8 in dem Wasserkreislauf 16 umgewälzt. Um einen möglichst zuverlässigen Wert für die Temperatur des Metallhydridspeichers 6 zu erhalten, wird das Umgebungswasser 8 in dem Wasserkreislauf 16 zunächst mehrmals umgewälzt.

Erst dann setzt die Temperaturregelung ein. Diese Temperaturregelung erfolgt auf Grundlage der von dem Temperatursensor 46 eingangsseitig des Metallhydridspeichers 6 ermittelten Temperatur des Umgebungswassers 8 in dem Wasserkreislauf 16 und der von dem Temperatursensor 44 ausgangsseitig des Metallhydridspeichers 6 ermittelten Temperatur des Umgebungswassers 8 in dem Wasserkreislauf 16. Die ermittelten Temperaturwerte werden in der Temperaturregeleinrichtung in einem Regelalgorithmus verarbeitet, in dem zunächst festgestellt wird, ob das in dem Wasserkreislauf 16 umgewälzte Umgebungswasser erwärmt oder gekühlt werden muss.

Falls eine Erwärmung des Metallhydridspeichers 6 erforderlich ist, stellt die Temperaturregeleinrichtung entsprechend die Heizleistung der Heizung 24 und über die Motordrehzahl der Umwälzpumpe 22 den Volumenstrom in dem Wasserkreislauf 16. Für den Fall, dass der Metallhydridspeicher zu kühlen ist, steigert die Temperaturregeleinrichtung die Kühlleistung des Wärmetauschers 26. Hierzu werden von der Temperaturregeleinrichtung zunächst für eine Grobeinstellung die Ventile 36 und 38 und dann zur Feineinstellung die Durchsatzleistung der Ansaugpumpe 32 unter Berücksichtigung der von dem Temperatursensors 52 ermittelten Temperatur des Umgebungswassers 8 eingestellt.

Auf Grundlage der von den Temperatursensoren 44 und 46 ermittelten Temperatur des Metallhydridspeichers 6 bestimmt die Temperaturregeleinrichtung auch, wann und wie der Metallhydridspeicher 6 zu beladen ist. Daher ist die Temperaturregeleinrichtung auch mit einem Dispenser signalverbunden, über den die eigentliche Betankung des Metallhydridspeichers mit Wasserstoff erfolgt.

Während des gesamten Betriebs der Reaktandentankstelle 2 werden an dem Wasserkreislauf 16 auftretende Leckageverluste ausgeglichen, indem der Wasserkreislauf 16 über die Ansaugleitung 40 wieder mit Umgebungswasser 8 aufgefüllt wird. Hierbei wird der Wasserdurchsatz in der Ansaugeinrichtung kontinuierlich mittels der Durchflussmesseinrichtung 42 erfasst und von einer Überwachungseinrichtung überwacht. Übersteigt der Wasserdurchfluss einen normalen Wert, deutet dies auf eine Beschädigung der Reaktandentankstelle 2 oder des bootsseitigen Leitungssystems 10 oder auf eine falsche Installation der Schlauchleitungen 12 und 14 hin. In diesem Fall kann der Betankungsvorgang abgebrochen oder unterbrochen werden.

### Bezugszeichenliste

- 2: Reaktandentankstelle
- 4: Unterseeboot
- 6: Metallhydridspeicher
- 8: Umgebungswasser
- 10: Leitungssystem
- 12: Schlauchleitung
- 14: Schlauchleitung
- 16: Kreislauf, Wasserkreislauf
- 18: Leitung, Verbindungsleitung
- 20: Vakuumansaugeinrichtung
- 22: Umwälzpumpe
- 24: Heizung
- 26: Wärmetauscher
- 28: Einlassleitung
- 30: Ablassleitung
- 32: Ansaugpumpe
- 34: Kurzschlussleitung
- 36: Ventil
- 38: Ventil
- 40: Ausgleichsleitung
- 42: Durchflussmesseinrichtung
- 44: Temperatursensor
- 46: Temperatursensor
- 48: Durchflussmesseinrichtung
- 50: Durchflussmesseinrichtung
- 52: Temperatursensor

## Patentansprüche

1. Verfahren zum Betanken eines Metallhydridspeichers (6) eines Unterseeboots (4) mit Wasserstoff, mit folgenden Schritten:
- Bereitstellen eines Metallhydridspeichers (6) und einer Reaktandentankstelle mit Mitteln zum Erwärmen des Metallhydridspeichers (6),
- Annehmen eines maximalen Wertes einer Umgebungswassertemperatur,
- Betanken des Metallhydridspeichers (6) mit Wasserstoff,
- Einstellen und Halten der Temperatur des Metallhydridspeichers (6) während des Betankens oberhalb des angenommenen Wertes der Umgebungswassertemperatur über die Mittel zum Erwärmen des Metallhydridspeichers (6).

2. Verfahren nach Anspruch 1, **dadurch gekennzeichnet, dass** die Temperatur des Metallhydridspeichers (6) beim Betanken derart geregelt wird, dass sie zum Ende des Betankens einen Wert innerhalb eines Temperaturbereichs von 32-34°C aufweist.

3. Reaktandentankstelle (2) zum Betanken eines Metallhydridspeichers (6) eines Unterseebootes (4) mit Wasserstoff sowie Metallhydridspeichers eines Unterseeboots, mit Mitteln zum Erwärmen des Metallhydridspeichers (6), die als elektrische Heizung (24) zur Erwärmung eines Wärmeträgermediums ausgebildet sind und mit einer elektronischen Regeleinrichtung, zur Regelung der Temperatur des Metallhydridspeichers (6) mittels eines gespeicherten Algorithmus und die dafür konfiguriert ist, einen maximalen Wert einer Umgebungswassertemperatur anzunehmen und während des Betankens die Temperatur des Metallhydridspeichers oberhalb des angenommenen Wertes der Umgebungswassertemperatur über die Mittel zum Erwärmen des Metallhydridspeichers einzustellen und zu halten, und wobei als Wärmeträgermedium Umgebungswasser (8) des Unterseebootes (4) vorgesehen ist.

4. Reaktandentankstelle (2) nach Anspruch 3, **dadurch gekennzeichnet, dass** die Reaktandentankstelle (2) Mittel zum Kühlen des Metallhydridspeichers (6) aufweist.

5. Reaktandentankstelle (2) nach einem der Ansprüche 3 oder 4, **dadurch gekennzeichnet, dass** Schlauchleitungen (12, 14) vorgesehen sind, über die die Reaktandentankstelle (2) an Anschlüsse eines bootseitigen Leitungssystems (10) zur Bildung eines geschlossenen Wasserkreislaufs (16) anschließbar ist.

6. Reaktandentankstelle (2) nach Anspruch 5, **dadurch gekennzeichnet, dass** in dem Wasserkreislauf (16) ein eingangsseitig mit Umgebungswasser (8) gespeister Wärmetauscher (26) angeordnet ist.

7. Reaktandentankstelle (2) nach einem der Ansprüche 4 bis 6, **dadurch gekennzeichnet, dass** ein Regelkreis vorgesehen ist, der eine Temperaturregeleinrichtung und eine zumindest aus den Mitteln zum Erwärmen und zum Kühlen des Metallhydridspeichers (6) gebildete Regelstrecke umfasst, wobei die Temperatur des Metallhydridspeichers (6) mittels eines in der Temperaturregeleinrichtung gespeicherten Algorithmus geregelt wird.

8. Reaktandentankstelle (2) nach Anspruch 7, **dadurch gekennzeichnet, dass** die Regelstrecke weiterhin eine Umwälzpumpe (22) zum Umwälzen des Umgebungswassers (8) umfasst.

9. Reaktandentankstelle (2) nach einem der Ansprüche 7 oder 8, **dadurch gekennzeichnet, dass** eingangs- und ausgangsseitig der Metallhydridspeicher (6) Mittel (44, 46) zur Erfassung der Wassertemperatur vorgesehen sind, welche mit der Temperaturregeleinrichtung signalverbunden sind.

10. Reaktandentankstelle (2) nach einem der Ansprüche 8 oder 9, **dadurch gekennzeichnet, dass** anströmseitig der Umwälzpumpe (22) eine Ansaugeinrichtung (20) vorgesehen ist, um Umgebungswasser (8) anzusaugen.

11. Reaktandentankstelle (2) nach einem der Ansprüche 8 bis 10, **dadurch gekennzeichnet, dass** eine in dem Umgebungswasser (8) mündende Ausgleichsleitung (40) vorgesehen ist, um aufgrund von Leckagen verloren gegangenes Umgebungswasser (8) nachzuführen.

12. Reaktandentankstelle (2) nach Anspruch 11, **dadurch gekennzeichnet, dass** die Ausgleichsleitung (40) direkt anströmseitig der Umwälzpumpe (22) in den Wasserkreislauf (16) mündet.

## Claims

1. Method of filling a metal hydride storage medium (6) of a submarine (4) with hydrogen, comprising the following steps:
- providing a metal hydride storage medium (6) and a reactant filling station with means of heating the metal hydride storage medium (6),
- assuming a maximum value of a surrounding water temperature,
- filling the metal hydride storage medium (6) with hydrogen,
- setting and keeping the temperature of the metal hydride storage medium (6) during the filling above the assumed value of the surrounding water temperature using the means of heating the metal hydride storage medium (6).

2. Method according to Claim 1, **characterized in that** the temperature of the metal hydride storage medium (6) is controlled in the course of filling such that it has a value within a temperature range of 32-34°C at the end of the filling.

3. Reactant filling station (2) for filling a metal hydride storage medium (6) of a submarine (4) with hydrogen, and metal hydride storage medium of a submarine, having means of heating the metal hydride storage medium (6) in the form of an electrical heater (24) for heating a heat carrier medium and having an electronic control device for controlling the temperature of the metal hydride storage medium (6) by means of a stored algorithm, and configured to assume a maximum value of a surrounding water temperature and during filling to set and keep the temperature of the metal hydride storage medium above the assumed value of the surrounding water temperature using the means of heating the metal hydride storage medium, and wherein the heat carrier medium envisaged is surrounding water (8) of the submarine (4).

4. Reactant filling station (2) according to Claim 3, **characterized in that** the reactant filling station (2) has means of cooling the metal hydride storage medium (6).

5. Reactant filling station (2) according to either of Claims 3 and 4, **characterized in that** hose conduits (12, 14) by means of which the reactant filling station (2) can be connected to connections of a conduit system (10) on the submarine side for formation of a closed water circuit (16) are provided.

6. Reactant filling station (2) according to Claim 5, **characterized in that** a heat exchanger (26) fed with surrounding water (8) on the input side is disposed in the water circuit (16).

7. Reactant filling station (2) according to any of Claims 4 to 6, **characterized in that** a closed-loop control circuit is provided, which comprises a temperature control device and a closed-loop control system formed at least from the means of heating and cooling the metal hydride storage medium (6), wherein the temperature of the metal hydride storage medium (6) is controlled by means of an algorithm stored in the temperature control device.

8. Reactant filling station (2) according to Claim 7, **characterized in that** the closed-loop control system further comprises a circulation pump (22) for circulation of the surrounding water (8).

9. Reactant filling station (2) according to either of Claims 7 and 8, **characterized in that** means (44, 46) of detecting the water temperature are provided on the input and output side of the metal hydride storage medium (6), and these are connected by signal to the temperature control device.

10. Reactant filling station (2) according to either of Claims 8 and 9, **characterized in that** a suction unit (20) is provided on the inflow side of the circulation pump (22), in order to suck in surrounding water (8).

11. Reactant filling station (2) according to any of Claims 8 to 10, **characterized in that** a balancing conduit (40) that opens into the surrounding water (8) is provided in order to replenish surrounding water (8) that has been lost owing to leaks.

12. Reactant filling station (2) according to Claim 11, **characterized in that** the balancing conduit (40) opens into the water circuit (16) directly on the inflow side of circulation pump (22).

## Revendications

1. Procédé permettant de remplir un réservoir d'hydrure métallique (6) d'un sous-marin (4) avec de l'hydrogène, comprenant les étapes suivantes consistant à :
- prévoir un réservoir d'hydrure métallique (6) et un poste de ravitaillement en réactifs comprenant des moyens pour chauffer le réservoir d'hydrure métallique (6),
- adopter une valeur maximale d'une température de l'eau environnante,
- remplir le réservoir d'hydrure métallique (6) avec de l'hydrogène,
- régler et maintenir la température du réservoir d'hydrure métallique (6) pendant le remplissage au-dessus de la valeur adoptée de la température de l'eau environnante par les moyens pour chauffer le réservoir d'hydrure métallique (6).

2. Procédé selon la revendication 1, **caractérisé en ce que** lors du remplissage, la température du réservoir d'hydrure métallique (6) est régulée de telle sorte que vers la fin du remplissage, elle présente une valeur comprise dans une plage de température de 32 à 34° C.

3. Poste de ravitaillement en réactifs (2) pour remplir un réservoir d'hydrure métallique (6) d'un sous-marin (4) avec de l'hydrogène, ainsi qu'un réservoir d'hydrure métallique d'un sous-marin, comprenant des moyens pour chauffer le réservoir d'hydrure métallique (6) qui sont réalisés comme un chauffage électrique (24) pour chauffer un milieu caloporteur, et comprenant un dispositif de régulation électronique pour réguler la température du réservoir d'hydrure métallique (6) au moyen d'un algorithme enregistré, et qui est configuré pour adopter une valeur maximale d'une température de l'eau environnante et, pendant le remplissage, pour régler et maintenir par les moyens de chauffage du réservoir d'hydrure métallique la température du réservoir d'hydrure métallique au-dessus de la valeur adoptée de la température de l'eau environnante, et dans lequel l'eau environnante (8) du sous-marin (4) est prévue comme milieu caloporteur.

4. Poste de ravitaillement en réactifs (2) selon la revendication 3, **caractérisé en ce que** le poste de ravitaillement en réactifs (2) présente des moyens pour refroidir le réservoir d'hydrure métallique (6).

5. Poste de ravitaillement en réactifs (2) selon l'une quelconque des revendications 3 et 4, **caractérisé en ce que** des conduites souples (12, 14) sont prévues par lesquelles le poste de ravitaillement en réactifs (2) peut être raccordé à des branchements d'un système de conduites (10) côté embarcation pour former un circuit d'eau fermé (16).

6. Poste de ravitaillement en réactifs (2) selon la revendication 5, **caractérisé en ce qu'**un échangeur thermique (26) alimenté en eau environnante (8) côté entrée est disposé dans le circuit d'eau (16).

7. Poste de ravitaillement en réactifs (2) selon l'une quelconque des revendications 4 à 6, **caractérisé en ce qu'**un circuit d'asservissement est prévu qui comprend un dispositif de régulation de température et un système asservi formé au moins par les moyens pour chauffer et refroidir le réservoir d'hydrure métallique (6), la température du réservoir d'hydrure métallique (6) étant régulée au moyen d'un algorithme enregistré dans le dispositif de régulation de température.

8. Poste de ravitaillement en réactifs (2) selon la revendication 7, **caractérisé en ce que** le système asservi comprend en outre une pompe de recirculation (22) pour recirculer l'eau environnante (8).

9. Poste de ravitaillement en réactifs (2) selon l'une quelconque des revendications 7 et 8, **caractérisé en ce que** du côté entrée et du côté sortie des réservoirs d'hydrure métallique (6), des moyens (44, 46) pour détecter la température d'eau sont prévus qui sont connectés au dispositif de régulation de température pour la transmission de signaux.

10. Poste de ravitaillement en réactifs (2) selon l'une quelconque des revendications 8 et 9, **caractérisé en ce que** du côté admission de la pompe de recirculation (22), un dispositif d'aspiration (20) est prévu pour aspirer l'eau environnante (8).

11. Poste de ravitaillement en réactifs (2) selon l'une quelconque des revendications 8 à 10, **caractérisé en ce qu'**une conduite de compensation (40) débouchant sur l'eau environnante (8) est prévue pour tracer de l'eau environnante (8) perdue dû à des fuites.

12. Poste de ravitaillement en réactifs (2) selon la revendication 11, **caractérisé en ce que** la conduite de compensation (40) débouche directement côté admission de la pompe de recirculation (22) dans le circuit d'eau (16) .
